# EUROPEAN PATENT APPLICATION

(11) **EP 1 495 814 A1**
(43) Date of publication of application: **12.01.2005**
(21) Application number: 04254034.4
(22) Date of filing: 06.07.2004
(51) Int. Cl.: B09B 3/00, B03B 9/06, B29B 17/02

(54) **Mobile apparatus for the release of toxic compounds**

(30) Priority: 06.07.2003 GB 0317526
(71) Applicant: Lynch Environmental Solutions Limited, Cumnock, East Ayrshire KA18 1HF (GB)
(72) Inventor: Lynch, Edward, East Ayrshire, KA18 1HF (GB)
(74) Representative: Murnane, Graham John

(57) **Abstract**

An apparatus for releasing toxic compounds from an appliance, the apparatus comprising: agitating means adapted to separate the toxic compounds from the appliance; pressure reducing means for reducing the air pressure within the appliance below atmospheric pressure; and collecting means fluidly connected to the pressure reducing means and adapted for collecting the toxic compounds which have been separated from the appliance and which exit the appliance due to the reduced pressure.

## Description

The present invention relates to apparatus for the release of toxic compounds. In particular, but not exclusively, the invention relates to mobile apparatus for releasing toxic compounds, such as chlorofluorocarbons (CFCs) and Hydrofluorocarbons (HFCs), from the foam used in on-site refrigeration appliances.

Many types of large appliances and installations concerned with refrigeration and air conditioning utilise refrigerants to absorb and then dissipate heat. These appliances and installations include, but are not limited to, the refrigeration compartment of lorries, chiller rooms of shops and factories, bar chillers, air conditioning units, water coolers, and refrigerated vending machines.

In many appliances or installations, CFC was a popular choice of refrigerant until the damage that it causes to the environment became known, particularly the damage to the ozone layer and the contribution to global warming. One alternative to CFC is HFC. While this gas does not damage the ozone layer, it does contribute to global warming.

There is presently a lack of facilities for the safe disassembly and disposal of any appliances containing refrigerant. Such facilities that do exist tend to be permanent sites which are unsuitable for the treatment of large immobile appliances and fixed installations. Furthermore, existing facilities are typically adapted to enclose the unit to be disposed so as to reduce or eliminate the emission of refrigerants. This is not feasible for excessively large appliances or installations.

Appliances or installations, such as those listed above, often have an outer casing which is not airtight. For instance, the bodies of the refrigeration compartment of lorries are typically pot riveted. Therefore, there is a need to provide an apparatus for disposal which does not enclose the unit to be disposed but which can reduce or prevent the emission of refrigerants.

It is therefore necessary to disassemble and dispose of appliances and installations that have reached the end of their useful life in a manner that does not cause substantial emission of these toxic substances. Older appliances and installations are more likely to have CFC as the refrigerant.

Known apparatus and methods for disposal typically involve fragmentation of the complete appliances and installations, and also an open foam milling process. Such means of disposal typically result in emissions of around 2.5% of the refrigerant present. Fragmentation does not allow recycling of the housing and components of the appliances and installations.

Recent European legislation stipulates that appliances containing refrigerant can no longer be disposed of in land fill sites, and so the emissions from the appliances become more significant.

According to the present invention, there is provided an apparatus for releasing toxic compounds from an appliance, the apparatus comprising:
agitating means adapted to separate the toxic compounds from the appliance;
pressure reducing means for reducing the air pressure within the appliance below atmospheric pressure; and
collecting means fluidly connected to the pressure reducing means and adapted for collecting the toxic compounds which have been separated from the appliance and which exit the appliance due to the reduced pressure.

It is to be understood that the term appliance is also intended to include installations.

Preferably the pressure reducing means comprises a vacuum chamber fluidly connected to the appliance such that air is drawn from the appliance into the vacuum chamber. Preferably the vacuum chamber comprises a compressor. Preferably the pressure reducing means is sealedly connected to the appliance.

Preferably the agitating means comprises a blasting unit adapted to direct blast material at a high velocity towards the appliance. The blast material may be glass, metal filings or sand. Preferably the blasting unit is pneumatically actuated. Preferably the user may adjust the aim of the blasting unit so that blast material may be directed at different locations of the appliance. Preferably the agitating means is sealedly connected to the appliance.

Preferably toxic compounds exit the appliance via an inlet of the pressure reducing means. Preferably the inlet of the pressure reducing means and the outlet of the agitating means are provided proximal to each other. Preferably the apparatus further comprises a cutting tool for forming an aperture in a surface of the appliance. Preferably the inlet and outlet are adapted for being positioned within the aperture. Preferably the cutting tool is provided with a circular cutting blade. Preferably the diameter of the cutting blade is around 40 mm. Preferably the cutting tool is adapted to force material inside the appliance as the aperture is cut.

Preferably the collecting means comprises one or more chambers for treatment of the toxic compounds. Preferably a first and second chamber are provided. Preferably the collecting means comprises storage tanks for storing the toxic compounds. Preferably the storage tanks are transportable to the or each treatment chamber.

Preferably the first chamber includes air disturbing means adapted to maintain the toxic compounds in an airborne condition. Preferably the air disturbing means comprises a cycle-generating motor.
Preferably heating means is provided to heat the first chamber. Preferably the first chamber is heated to a first specified temperature such that the toxic compound is released from the medium for further extraction. Preferably the first specified temperature is approximately 35°c. Alternatively, or in addition, the first chamber is heated to a second specified temperature such that the toxic compound is released from the medium and then destroyed. Preferably the second specified temperature is greater than 280°c.

Preferably the collecting means includes milling means to mill the medium. Preferably the milling means is provided at an inlet to the first chamber. Preferably the collecting means includes sorting means to sort the medium from the blast material.

Preferably the sorting means is provided at the inlet to the first chamber. Preferably the sorting means comprises of trap such that the heavier blast material falls into the trap, leaving the lighter medium to continue to the first chamber.

Preferably the collecting means includes a second chamber fluidly connected to the first chamber. Preferably a first pump is provided to draw air and toxic compounds from the first chamber to the second chamber. Preferably the first pump is a vacuum pump. Preferably a valve is interposed between the first chamber and the second chamber. Preferably cooling means are provided to cool the contents of the second chamber. Preferably filtering means is interposed between the first chamber and the second chamber. Preferably the filter means comprises a charcoal filter for converting the toxic compound from vapour to a liquid form.

Preferably a second pump is provided to draw the toxic compound from the second chamber. Preferably the toxic compound is transported to containers for subsequent destruction.

Preferably the collecting means comprises detection means to detect the presence of the toxic compound. Preferably the detection means comprises a first detector provided at the first chamber. Preferably the first detector is adapted to operate the first pump when the presence of the toxic compound is detected. Preferably the first detector is adapted to open the valve when the presence of the toxic compound is detected. Preferably the detection means comprises a second detector provided at the second chamber. Preferably the second detector is adapted to operate the second pump when the presence of the toxic compound is detected.

Preferably the toxic compound is CFC. Preferably the medium is a polyurethane foam that contains CFC.

According to a second aspect of the present invention there is provided a method of releasing toxic compounds from an appliance comprising the steps of:
agitating the appliance to separate the toxic compounds from the appliance;
reducing the pressure within the appliance below atmospheric pressure
collecting the toxic compounds which have been separated from the appliance and which exit the appliance due to the reduced pressure.

Preferably the step of agitating the appliance comprises directing blast material at a high velocity towards the appliance.

Preferably the method includes the step of cutting an aperture in a surface of the appliance.

Preferably the step of collecting includes storing the toxic compounds in storage tanks. Preferably the step of collecting further includes transporting the toxic compounds within the storage tanks to one or more treatment chambers.

An embodiment of the present invention will now be described, by way of example only, with reference to the accompanying drawings, in which:
Fig. 1 shows a schematic view of the apparatus fluidly connected to a compartment of a vehicle;
Fig. 2 shows a side view of a blasting unit of the apparatus of Fig. 1; and
Fig. 3 shows a side view of treatment chambers of the apparatus of Fig. 1.

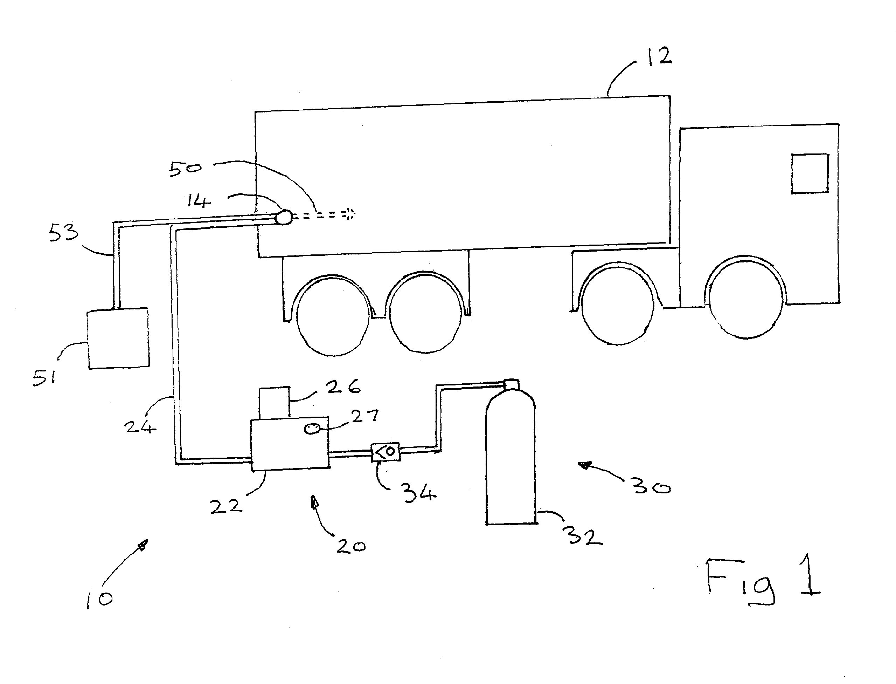

Fig. 1 shows an apparatus 10 for releasing toxic compounds from an appliance 12. In this example, the appliance is the refrigeration compartment of a lorry. The apparatus comprises agitating means in the form of a blasting unit 50 for separating the toxic compounds from the appliance 12, and pressure reducing means for reducing the air pressure within the appliance 12 below atmospheric pressure. The apparatus 10 also includes collecting means 30 in the form of a storage tank 32 for collecting the toxic compounds which have become separated from the appliance 12.

The pressure reducing means 20 comprises a vacuum chamber 22 which is fluidly connected to the appliance 12 by a first hose-line 24. A vacuum is created within the vacuum chamber 22 using a compressor 26. A pressure gauge 27 connected to a pressure sensor (not shown) indicates the pressure within the vacuum chamber 22, which corresponds to the pressure within the compartment 12 of the vehicle. An outlet of the vacuum chamber 22 is fluidly connected to the storage tank 32. A non return valve interposes the vacuum chamber 22 and storage tank 32 to prevent the flow of fluid or particles from the storage tank 32 to the vacuum chamber 22.

The blasting unit 50 directs blast material such as glass, metal filings or sand, from a reservoir 51 to the appliance 12 via a second hose line 53 and an outlet or nozzle 54.

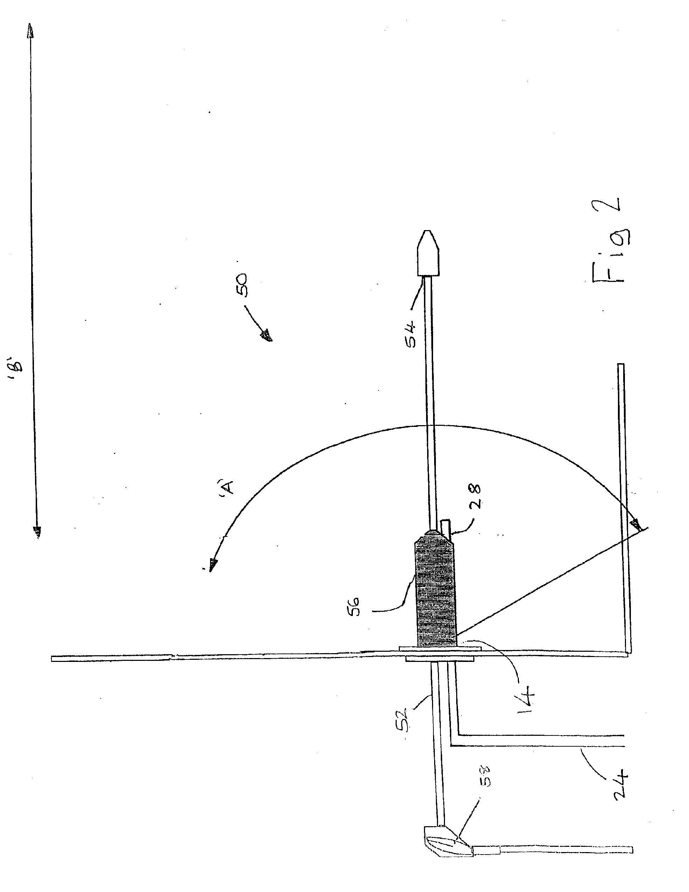

The blasting unit 50 is shown in more detail in Figure 2. The blasting unit 50 has an elongate barrel 52 which extends into the appliance 12 via an aperture 14 that is cut in a side wall of the appliance 12. A rubber seal 56 insures an airtight fitting at the aperture 14. The blasting unit 50 is pneumatically operated by a compressor (not shown) and a trigger 58 is provided to initiate blasting.

The aperture 14 is formed using a cutting tool (not shown) having a circular cutting blade. The diameter of the blade is around 40mm. The cutting tool is adapted to force material inside the appliance 12 as the aperture is cut.

When operated, the blasting unit 50 fires blast material towards the internal surfaces of the appliance 12. The blasting unit 50 is capable of being moved in directions A and B so that the aim of the blasting unit 50 may be adjusted. The blasting unit 50 may also be moved in a direction normal to direction A.

An inlet 28 to the pressure reducing means 20 is also provided within the aperture 14 and proximal to the barrel 52 and nozzle 54 of the blasting unit 50.

The linings of the refrigeration compartment of the appliance 12 are initially removed so that the refrigerant medium, typically in the form of polyurethane foam, is exposed. This medium contains the toxic compounds such as CFC. Firing blast material at the appliance 12 agitates the foam causing it to become separated from the appliance 12. The lighter weight foam exits the appliance 12 due to the reduced pressure while the heavier blast material remains on the floor of the appliance 12.

The collecting means 30 also comprises a first and second treatment chamber, 90, 120, and the toxic compounds are transported to the treatment chambers within the storage tank 32.

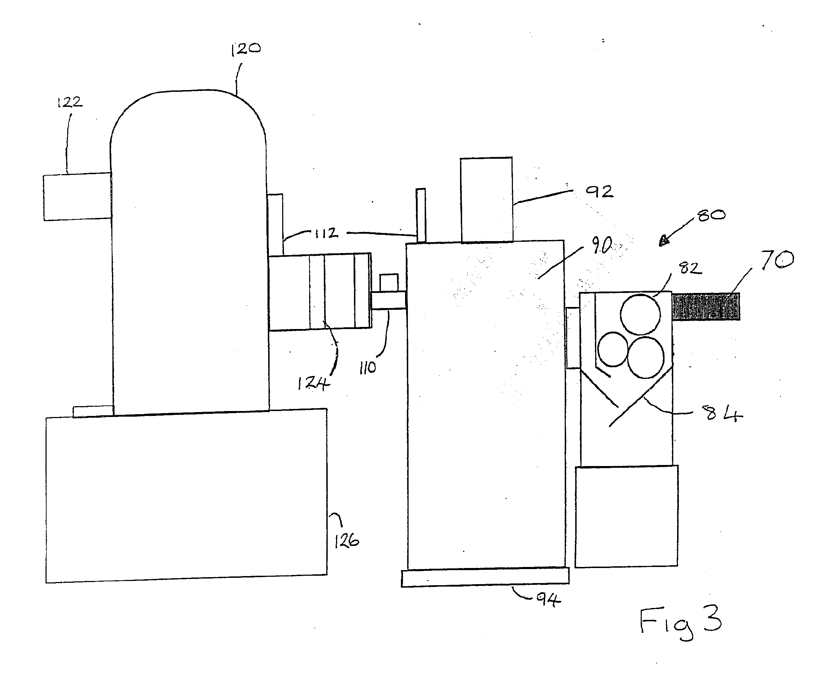

Referring to Fig. 3, the foam stored in the storage tank 32 is pumped into the inlet 70 of the first treatment chamber 90. Interposed between the inlet 70 and first chamber 90 is milling means that comprises a milling apparatus 80 having a number of rotating milling wheels 82. These milling wheels 82 break up the foam into smaller pieces as it travels through the milling apparatus 80. The flow path within the milling apparatus 80 also forces the pieces of foam to head downwards and then upwards into the first chamber 90. The milling apparatus 80 also includes sorting means in the form of a trap 84. Any heavier blast material that has also been collected will tend to fall into the trap 84.

Air disturbing means in the form of a cyclogenerator motor 92 is provided near the top of the first chamber 90. This motor 92 creates a cyclone within the first chamber 90 which maintains the foam in an airborne condition. The apparatus includes heating means which includes a heater 94 provided at the base of the first chamber 90. The heater 94 heats the first chamber 90 to a specified temperature. This temperature is typically around 35°C. At this temperature the CFC is released from the polyurethane foam and the CFC gas can then be further extracted as is described below. It should be appreciated that the heater 94 could heat the first chamber 90 to a higher temperature, such as greater than 280°C, so that the CFC gas is released and then destroyed.

An outlet of the first chamber 90 is provided near to the top of the chamber 90, though at a distance from the cyclo-generator motor 92. A valve 110 is provided at the outlet. When the valve is open, CFC gas may flow via the outlet into a second chamber 120. A first pump 122 is provided to draw the air from the first chamber 90 to the second chamber 120. This pump 122 is typically a vacuum pump.

The second chamber 120 is not heated and therefore the CFC gas will cool within the second chamber 120 and tend to convert from a vapour to a liquid form. A charcoal filter 124 is also provided between the first chamber 90 and second chamber 120 which assists in converting the CFC gas from vapour to liquid form.

A second pump 126 is provided near the base of the cooling chamber 120. This pump 126 draws the CFC, in both liquid and vapour form from the second chamber 120. The CFC can be transported to containers (not shown) for later destruction.

Detection means in the form of gas detectors 112 are provided at a number of locations within the chambers. These detectors 112 are adapted to operate components of the apparatus 10 when the presence of CFC is detected. The detector 112 in the first chamber opens the valve 110 to allow the gas to flow from the first chamber 90 to the second chamber 130. The detector 112 within the second chamber 120 initiates operation of the second pump 126 to draw the CFC from the second chamber 120 to the containers for disposal.

In use, an operator first removes the linings of the appliance 12 to expose the foam. An aperture 14 is then cut in a surface of the appliance 12 using the cutting tool. The barrel 52 and nozzle 54 of the blasting unit 50 and the inlet 28 of the pressure reducing means 20 are placed in the aperture 14 and the aperture sealed.

The compressor 26 is operated, which typically delivers 0.03 cubic metres per minute of air from the appliance 12. Once the pressure gauge 27 indicates that the pressure within the appliance 12 has been reduced to 0.67 bar, blasting may be initiated.

The refrigeration compartment of a vehicle is typically pot riveted and air can enter the compartment from the outside environment. However, continued operation of the compressor 26 can maintain the reduced pressure within the compartment. Therefore, there is no emission of the toxic compound to the atmosphere.

The operator operates the blasting unit 50 to separate the foam from the appliance 12 and this foam is drawn into the inlet 28 of the pressure reducing means 20. The foam is drawn further into the storage tank 32 via the non return valve 34. The foam is then transported to the treatment chambers 90, 120 for further extraction and/or destruction of the toxic compounds.

The components of the apparatus 10 shown in Figure 1 can be provided as a mobile unit, such as being provided within a vehicle. Therefore, these components can be transported to a fixed installation for operation of the apparatus 10.

Various modifications and improvements can be made without departing from the scope of the present invention. For example, the toxic compound may be another gas, such as HFC or hydrochlorofluorocarbon (HCFC).

## Claims

1. An apparatus for releasing toxic compounds from an appliance, the apparatus comprising:
agitating means adapted to separate the toxic compounds from the appliance;
pressure reducing means for reducing the air pressure within the appliance below atmospheric pressure; and
collecting means fluidly connected to the pressure reducing means and adapted for collecting the toxic compounds which have been separated from the appliance and which exit the appliance due to the reduced pressure.

2. An apparatus as claimed in Claim 1, wherein the pressure reducing means comprises a vacuum chamber fluidly connected to the appliance such that air is drawn from the appliance into the vacuum chamber.

3. An apparatus as claimed in Claim 1 or 2, wherein the agitating means comprises a blasting unit adapted to direct blast material at a high velocity towards the appliance.

4. An apparatus as claimed in any preceding claim, wherein the agitating means is sealingly connected to the appliance.

5. An apparatus as claimed in any preceding claim, further comprising a cutting tool for forming an aperture in a surface of the appliance, and wherein the inlet and outlet are adapted for being positioned within the aperture.

6. An apparatus as claimed in Claim 5, wherein the cutting tool is adapted to force material inside the appliance as the aperture is cut.

7. An apparatus as claimed in any preceding claim, wherein the collecting means comprises:
one or more chambers for treatment of the toxic compounds; and
one or more storage tanks for storing the toxic compounds, the storage tanks being transportable to the or each treatment chamber.

8. A method of releasing toxic compounds from an appliance comprising the steps of:
agitating the appliance to separate the toxic compounds from the appliance;
reducing the pressure within the appliance below atmospheric pressure; and
collecting the toxic compounds which have been separated from the appliance and which exit the appliance due to the reduced pressure.

9. A method as claimed in Claim 8, wherein the step of agitating the appliance comprises directing blast material at a high velocity towards the appliance.

10. A method as claimed in Claim 8 or 9, wherein the step of collecting includes storing the toxic compounds in storage tanks, and transporting the toxic compounds within the storage tanks to one or more treatment chambers.
